# EUROPÄISCHE PATENTSCHRIFT

(11) **EP 2 106 497 B1**
(45) Veröffentlichungstag und Bekanntmachung des Hinweises auf die Patenterteilung: **02.11.2016**
(21) Anmeldenummer: 07722002.8
(22) Anmeldetag: 08.03.2007
(51) Int. Cl.: F02B 77/04, F02F 1/18, F16J 10/04

(54) **EINSATZ FÜR EINE ZYLINDERLAUFBUCHSE ODER EINEM ZYLINDER EINES VERBRENNUNGSMOTORS**
INSERT FOR A CYLINDER SLEEVE OR FOR A CYLINDER OF AN INTERNAL COMBUSTION ENGINE
INSERT POUR UNE CHEMISE DE CYLINDRE OU UN CYLINDRE DE MOTEUR À COMBUSTION

(30) Priorität: 20.12.2006 DE 102006060330
(43) Veröffentlichungstag der Anmeldung: 07.10.2009
(73) Patentinhaber: MAHLE International GmbH, 70376 Stuttgart (DE)
(72) Erfinder: BISCHOFBERGER, Ulrich, 73732 Esslingen (DE); STAPELBROEK, Kay, 70469 Stuttgart (DE)
(74) Vertreter: BRP Renaud & Partner mbB Rechtsanwälte Patentanwälte Steuerberater
(86) Internationale Anmeldenummer: PCT/DE2007/000427
(87) Internationale Veröffentlichungsnummer: WO 2008/074277

(56) Entgegenhaltungen:
- WO-A-97/03280
- DE-C1- 19 703 530
- FR-A- 2 763 362

## Beschreibung

Die vorliegende Erfindung betrifft eine Zylinderlaufbuchse oder einen Zylinder eines Verbrennungsmotors, mit einem Einsatz, der den Innendurchmesser der Zylinderlaufbuchse oder des Zylinders verengt, wobei der Einsatz als offener, vorgespannter Ring mit einem Ringstoß ausgebildet und derart gehalten ist, dass die radiale Flächenpressung umfangsseitig annähernd gleich ist.

Ein derartiger Einsatz dient dazu, die sich auf dem Feuersteg eines in der Zylinderlaufbuchse oder im Zylinder geführten Kolbens anlagernde Ölkohle abzustreifen und einen Kontakt der Ölkohle mit den Laufflächen der Zylinderlaufbuchse oder des Zylinders zu vermeiden.

Ein gattungsgemäßer Einsatz ist in der französischen Patentanmeldung FR 2 763 362 A1 offenbart. Dieser Einsatz ist in einer in der Zylinderlaufbuchse bzw. im Zylinder ausgebildeten umlaufenden Nut gehalten.

Ferner sind mehrere Einsätze bekannt, die aus geschlossenen Ringen gebildet sind.

Ein derartiger Einsatz ist z. B. aus der US-A 3,489,130 bekannt. Diese Druckschrift beschreibt eine Kolben-Zylinder-Anordnung für Brennkraftmaschinen, der zur Bildung eines verengten Abschnitts der Innenwand des Zylinders ein ringförmiger Einsatz zugeordnet ist.

Eine kombinierte Vorrichtung bestehend aus einem Abdichtelement zum Zylinder kopf und einem Ölkohleabstreifer wird in der US-A 4,474,147 beschrieben. Dazu wird der geschlossene Ringeinsatz zum Zylinderkopf hin abgewinkelt ausgeführt. Ein weiterer derartiger Einsatz ist aus der DE 35 43 668 A1 bekannt. In diesem Fall wird der als Tiefziehteil oder Drehteil ausgebildete Einsatz durch einen radialen Bund gehalten, der vom Zylinderkopf an das Zylinderkurbelgehäuse gepresst wird. Derartige Einsätze sind aufgrund der engen Toleranzen bei der Fertigung und der Montage nur schwer herzustellen und in die Laufbuchse einzupassen und daher für eine Serienfertigung nicht optimal geeignet.

Ein weiterer derartiger Einsatz ist aus der DE 103 21 034 B3 bekannt. Diese Druckschrift beschreibt eine Hubkolbenbrennkraftmaschine mit einem Zylinderkopf und einem Zylinderkurbelgehäuse mit einer Laufbuchse, der ein ringförmiger Einsatz zugeordnet ist. Der Einsatz überragt die Laufbuchse an ihrem zylinderkopfseitigen Ende und ist zwischen der Laufbuchse und dem Zylinderkopf vorzugsweise spielfrei eingepasst. Der Einsatz wird nach der Montage des Zylinderkopfes auf Druck beansprucht und so in der Laufbuchse gehalten.

Ein weiterer ähnlicher Einsatz ist aus der DE 198 11 780 C1 bekannt.

Die Aufgabe der vorliegenden Erfindung besteht darin, eine Zylinderlaufbuchse oder einen Zylinder eines Verbrennungsmotors zu schaffen, der einfach und kostengünstig herzustellen und zu montieren ist, dabei eine zuverlässige Wirkung erzielt und vielfältig einsetzbar ist.

Die Lösung besteht darin, dass die Zylinderlaufbuchse oder der Zylinder einen umlaufenden Falz aufweist, der in der oberen Stirnfläche der Zylinderlaufbuchse oder des Zylinders vorgesehen ist, dass der Einsatz einen sich radial erstreckenden umlaufenden Flansch aufweist, der in dem umlaufenden Falz liegt, und dass das Verhältnis der Dicke der Ringwand zum Innendurchmesser der Zylinderlaufbuchse oder des Zylinders zwischen 0,001 und 0,02 beträgt.

Gegenstand der Erfindung sind ferner ein Zylinderkurbelgehäuse für einen Verbrennungsmotor sowie ein Verbrennungsmotor, die mindestens eine erfindungsgemäße Zylinderlaufbuchse oder mindestens einen erfindungsgemäßen Zylinder aufweisen.

Gegenstand der Erfindung ist ferner ein Verfahren zur Herstellung einer erfindungsgemäßen Zylinderlaufbuchse oder eines erfindungsgemäßen Zylinders. Das erfindungsgemäße Verfahren zeichnet sich dadurch aus, dass ein Streifen mit einer definierten Breite aus einem Blechteil ausgestanzt wird, dessen eine Längskante zu einem sich radial erstreckenden umlaufenden Flansch abgekantet wird und anschließend zu einem offenen, vorgespannten Ring mit einem Ringstoß geformt wird, der anschließend in die Zylinderlaufbuchse oder in den Zylinder eingebracht wird, wobei der sich radial erstreckende umlaufende Flansch in einen umlaufenden Falz aufgenommen wird, die in der oberen Stirnfläche der Zylinderlaufbuchse oder des Zylinders vorgesehen ist.

Die erfindungsgemäße Vorrichtung bzw. der erfindungsgemäße Zylinder zeichnet sich durch die Kombination eines umlaufenden Falzes in seiner Stirnseite und eines Einsatzes mit einem sich radial erstreckenden umlaufenden Flansch aus. Da lediglich der umlaufende Flansch des Einsatzes im umlaufenden Falz der Zylinderlaufbuchse bzw. des Zylinders aufgenommen ist, ist keine weitere Ausnehmung insbesondere in der Lauffläche der Zylinderlaufbuchse oder des Zylinders erforderlich. Damit erfährt die erfindungsgemäße Zylinderlaufbuchse bzw. der erfindungsgemäße Zylinder keinerlei Beeinträchtigung in seiner Stabilität und seinen tribologischen Eigenschaften.

Der Einsatz ist so geformt und bemessen, dass er in der Zylinderlaufbuchse oder im Zylinder alleine durch radial nach außen wirkende Kräfte gehalten ist. Hierfür soll der Außendurchmesser des Einsatzes so bemessen sein, dass er in dem Bereich der Zylinderlaufbuchse oder des Zylinders, in dem er montiert werden soll, mit einer umfangsseitig annähernd gleichen radialen Flächenpressung an die Innenfläche der Zylinderlaufbuchse oder des Zylinders gepresst wird und axial in der als umlaufender Falz ausgebildeten Ausnehmung geführt ist. Die Ausführungen für den Einsatz umfassen dabei ein Verhältnis von Dicke d der Ringwand zu Zylinderdurchmesser D zwischen 0,001 und 0,02. Der Einsatz ist in der erfindungsgemäßen Zylinderlaufbuchse bzw. in dem erfindungsgemäßen Zylinder auch in radialer Richtung sehr sicher gehalten, da die radiale Flächenpressung umfangsseitig beim im Zylinder oder in der Zylinderlaufbuchse eingesetzten Zustand annähernd gleich ist.

Dieses Gestaltungsprinzip erlaubt für den Einsatz wesentlich geringere Baugrößen, als sie bisher möglich waren. Insbesondere kann die Wanddicke des Einsatzes deutlich gegenüber dem Stand der Technik reduziert werden. Ferner bleibt die Stabilität der Zylinderlaufbuchse oder des Zylinders gewahrt, denn die Wandung der Zylinderlaufbuchse oder des Zylinders wird nicht durch eine Nut geschwächt. Die reduzierte Baugröße des Einsatzes erlaubt auch die Verwendung nicht nur in großen Dieselmotoren für Nutzfahrzeuge, sondern in praktisch allen Motortypen einschließlich PKW-Motoren und Kleinmotoren wie bspw. Zweizylindermotoren.

Der Einsatz und in der Folge die erfindungsgemäße Zylinderlaufbuchse bzw. der erfindungsgemäße Zylinder können einfach und kostengünstig hergestellt und bequem montiert werden, wobei insbesondere mit dem erfindungsgemäßen Verfahren die Toleranzen so bemessen werden können, dass eine Serienherstellung möglich und auch wirtschaftlich ist.

Vorteilhafte Weiterbildungen ergeben sich aus den Unteransprüchen.

Ein Verhältnis der Dicke (d) der Ringwand zum Innendurchmesser (D) der Zylinderlaufbuchse oder des Zylinders von vorzugsweise zwischen 0,003 und 0,01 hat sich als besonders praktikabel erwiesen.

Der Ringstoß weist bevorzugt ein definiertes Stoßspiel auf, so dass im Betrieb eine eventuell auftretende Wärmeausdehnung ausgeglichen werden kann.

Die einander zugekehrten Stoßenden des Ringstoßes verlaufen in vorteilhafter Weise unter einem definierten Winkel (W) parallel zueinander. Bei dieser Ausgestaltung wird sichergestellt, dass auch im Bereich des Ringstoßes die Ölkohle so vollständig wie möglich vom Feuersteg des Kolbens entfernt wird.

Eine Dicke (d) der Ringwand des Einsatzes von bspw. 0,5mm bis 0,8mm hat sich als vorteilhaft erwiesen.

Der erfindungsgemäße Einsatz kann insbesondere aus Blech hergestellt sein, da dieses Material sich besonders leicht stanzen lässt.

Eine vorteilhafte Weiterbildung des erfindungsgemäßen Verbrennungsmotors sieht vor, dass der in der Zylinderlaufbuchse oder dem Zylinder angeordnete Kolben entlang seines Feuerstegs eine Ausnehmung aufweist, in die der Einsatz ragt.

Beim erfindungsgemäßen Verfahren ist es besonders zweckmäßig, nach dem Ausstanzen des Streifens am ungespannten Ring eine definierte Maulweite (M) einzustellen.

Ausführungsbeispiele der Erfindung werden im Folgenden anhand der beigefügten Zeichnungen näher erläutert. Es zeigen in einer schematischen, nicht maßstabsgetreuen Darstellung:
- Figur 1: ein Ausführungsbeispiel eines Einsatzes für eine erfindungsgemäße Zylinderlaufbuchse oder einen erfindungsgemäßen Zylinder in Ansicht;
- Figur 2: der Einsatz gemäß Figur 1 in einer Ansicht in Richtung des Pfeils P3 in Figur 1;
- Figur 3: einen Einsatz vor und nach dem Vorspannen in Ansicht;
- Figur 4: eine vergrößerte Teildarstellung des Einsatzes gemäß Figur 1 im eingebauten Zustand in einer Zylinderlaufbuchse im Schnitt;
- Figur 5: eine vergrößerte Teildarstellung des Einsatzes gemäß Figur 1 im eingebauten Zustand in einem Zylinder im Schnitt.

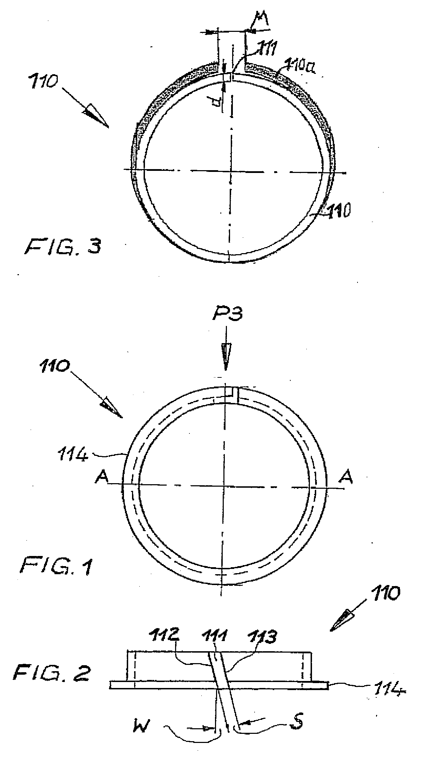

Die Figuren 1 und 2 zeigen ein Ausführungsbeispiel eines Einsatzes 110 für eine erfindungsgemäße Zylinderlaufbuchse oder einen erfindungsgemäßen Zylinder. Der Einsatz 110 ist im Ausführungsbeispiel ein Stanzteil aus einem Stahlblech mit einer Dicke d der Ringwand von 0,4mm bis 0,7mm. Der Einsatz 110 ist im Ausführungsbeispiel für eine Zylinderlaufbuchse oder einen Zylinder mit einem Innendurchmesser von 130mm gefertigt. Der Einsatz 110 weist einen Ringstoß 111 auf. Im montierten Zustand ist der Ringstoß 111 so bemessen, dass er nicht vollständig geschlossen ist, sondern ein gewisses Stoßspiel S verbleibt, so dass der Einsatz 110 auch bei einer Wärmeausdehnung im Betrieb spannungsfrei bleibt. Die einander zugekehrten Stoßenden 112, 113 des Ringstoßes 111 verlaufen unter einem definierten Winkel W parallel zueinander (vgl. Figur 2). Damit wird eine geschlossene Kontur des Einsatzes 110 erzielt, so dass der Feuersteg des in der Zylinderlaufbuchse oder im Zylinder geführten Kolbens möglichst über seine gesamte Mantelfläche von Ölkohle befreit wird.

Figur 3 zeigt den Einsatz 110 aus Figur 1 in ungespanntem und gespanntem Zustand, wobei aus Gründen der Übersichtlichkeit auf die Darstellung des Flansches verzichtet wurde. Für einen Kolben mit einem nominalen Durchmesser von 130mm wird ein Blechstreifen gemäß dem erfindungsgemäßen Verfahren aus einem Stahlblech mit einer Wandstärke von 0,8mm gestanzt, dessen eine Längskante zu einem Flansch 114 abgekantet wird. Dann wird der Blechstreifen zu einem offenen vorgespannten Ring geformt. Der ungespannte Ring ist mit dem Bezugszeichen 110a versehen. Am ungespannten Ring 110a wird eine definierte Maulweite M von im Ausführungsbeispiel 20mm eingestellt. Die Außenform wird so gestaltet, dass sich über den Umfang des eingebauten Einsatzes 110 eine gleichmäßige Flächenpressung ergibt.

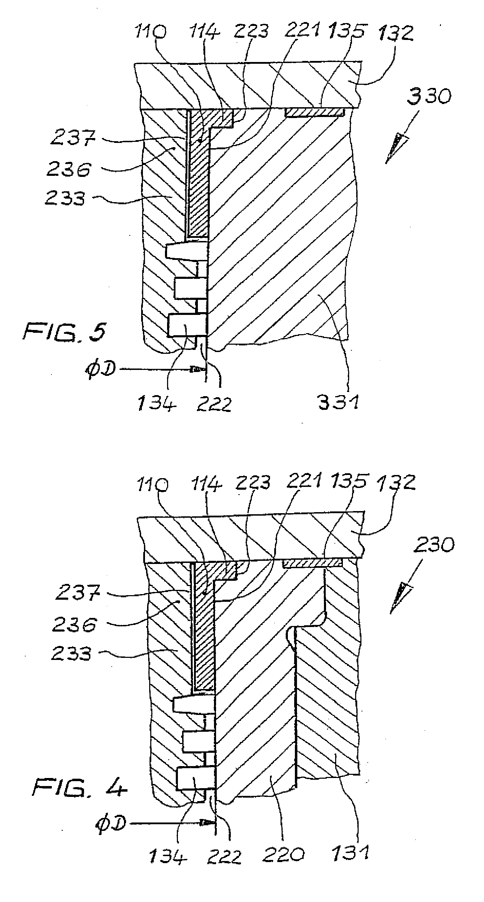

Figur 4 zeigt den Einsatz 110 mit seinem Flansch 114 gemäß Figur 1 in montiertem Zustand. Figur 4 zeigt einen Ausschnitt aus einem Verbrennungsmotor 230 mit einem Zylinderkurbelgehäuse 131 und einem Zylinderkopf 132. Zwischen dem Zylinderkurbelgehäuse 131 und dem Zylinderkopf 132 ist eine Zylinderkopfdichtung 135 eingelegt. In Zylinderbohrungen des Zylinderkurbelgehäuses 131 sind Zylinderlaufbuchsen 220 aufgenommen, in deren Innenraum 222 ein Kolben 233 geführt ist. Der Kolben 233 ist mit Kolbenringen 134 versehen, die den Brennraum (nicht dargestellt) abdichten. Oberhalb der Kolbenringe 134 befindet sich der umlaufende Feuersteg 236 des Kolbens 233.

Der Einsatz 110 ist mit seinem Flansch 114 lediglich in einem umlaufenden Falz 223 aufgenommen, der in der oberen, dem Zylinderkopf 132 zugewandten Stimfläche der Zylinderlaufbuchse 220 vorgesehen ist. Der Einsatz 110 ist in der Innenfläche der Zylinderlaufbuchse 220 durch nach außen wirkende Radialkräfte gehalten. Der Einsatz 110 ragt in eine Ausnehmung 237 im Feuersteg 236 des Kolbens 233. Dabei beträgt im Ausführungsbeispiel die Tiefe der Ausnehmung 237 0,4mm. Der Einsatz 110 ist im Bereich 221 der oberen Totpunktlage des Kolbens 233 in der Zylinderlaufbuchse 220 angeordnet, d.h. im Bereich der Bewegungsumkehr des Kolbens 233 während des Betriebs. Damit wird der gesamte Bereich der im Feuersteg 236 vorgesehenen Ausnehmung 237, der dem Brennraum am nächsten liegt und daher am meisten der Anlagerung von Ölkohle ausgesetzt ist, vom Einsatz 110 überstrichen, wenn sich der Kolben 233 während des Betriebs bewegt. Damit ist gewährleistet, dass etwa sich ablagernde Ölkohle vollständig und zuverlässig vom Feuersteg 236 entfernt wird.

Figur 5 zeigt ein Ausführungsbeispiel, bei dem die Zylinderlaufbuchse 220 entfallen ist, jedoch die gleichen vorgenannten Bedingungen entsprechend den Darlegungen zu Figur 4 für einen Zylinder eines Verbrennungsmotors 330 mit einem Zylinderkurbelgehäuse 331 gelten.

## Patentansprüche

1. Zylinderlaufbuchse (220) oder Zylinder eines Verbrennungsmotors (230, 330), mit einem Einsatz (110), der den Innendurchmesser (D) der Zylinderlaufbuchse (220) oder des Zylinders verengt, wobei der Einsatz (110) als offener, vorgespannter Ring (110) mit einem Ringstoß (111) ausgebildet ist, der derart gehalten ist, dass die radiale Flächenpressung umfangsseitig annähernd gleich ist, **dadurch gekennzeichnet, dass** die Zylinderlaufbuchse (220) oder der Zylinder einen umlaufenden Falz (223) aufweist, der in der oberen Stirnfläche der Zylinderlaufbuchse (220) oder des Zylinders vorgesehen ist, dass der Einsatz (110) einen sich radial erstreckenden umlaufenden Flansch (114) aufweist, der in dem umlaufenden Falz (223) liegt, und dass das Verhältnis der Dicke (d) der Ringwand zum Innendurchmesser (d) der Zylinderlaufbuchse (220) oder des Zylinders zwischen 0,001 und 0,02 beträgt.

2. Zylinderlaufbuchse oder Zylinder nach Anspruch 1, **dadurch gekennzeichnet, dass** das Verhältnis von Dicke (d) der Ringwand zum Innendurchmesser (D) der Zylinderlaufbuchse (220) oder des Zylinders zwischen 0,003 und 0,01 beträgt.

3. Zylinderlaufbuchse oder Zylinder nach einem der vorhergehenden Ansprüche, **dadurch gekennzeichnet, dass** der Ringstoß (111) ein definiertes Stoßspiel (S) aufweist.

4. Zylinderlaufbuchse oder Zylinder nach einem der vorhergehenden Ansprüche, **dadurch gekennzeichnet, dass** die einander zugekehrten Stoßenden (112, 113) des Ringstoßes (111) des Einsatzes unter einem definierten Winkel (W) parallel zueinander verlaufen.

5. Zylinderlaufbuchse oder Zylinder nach einem der vorhergehenden Ansprüche, **dadurch gekennzeichnet, dass** die Dicke (d) der Ringwand 0,5mm bis 0,8mm beträgt.

6. Zylinderlaufbuchse oder Zylinder nach einem der vorhergehenden Ansprüche, **dadurch gekennzeichnet, dass** der Einsatz (110) aus Blech hergestellt ist.

7. Zylinderkurbelgehäuse (131, 331) für einen Verbrennungsmotor (230, 330), mit mindestens einer Zylinderlaufbuchse (220) oder mindestens einem Zylinder nach einem der Ansprüche 1 bis 6.

8. Verbrennungsmotor (230, 330) mit einem Zylinderkurbelgehäuse (131, 331), der mindestens einen Zylinder oder mindestens eine Zylinderlaufbuchse (220) nach einem der Ansprüche 1 bis 6 aufweist.

9. Verbrennungsmotor (230, 330) nach Anspruch 8, **dadurch gekennzeichnet, dass** die in den Zylinderlaufbuchsen (220) oder in den Zylindern angeordneten Kolben (233) entlang ihres Feuerstegs (236) eine Ausnehmung (237) aufweisen, in die der Einsatz (110) ragt.

10. Verbrennungsmotor nach einem der Ansprüche 8 oder 9, nämlich ein Dieselmotor für ein Nutzfahrzeug.

11. Verbrennungsmotor nach einem der Ansprüche 8 oder 9, nämlich ein PKW-Motor.

12. Verbrennungsmotor nach einem der Ansprüche 8 oder 9, nämlich ein Kleinmotor, insbesondere Zweitaktmotor.

13. Verfahren zur Herstellung einer Zylinderlaufbuchse (220) oder eines Zylinders eines Verbrennungsmotors (230), zur Verengung des Durchmessers der Zylinderlaufbuchse (220) oder des Zylinders, **dadurch gekennzeichnet, dass** ein Streifen mit einer definierten Breite aus einem Blechteil ausgestanzt wird, dessen eine Längskante zu einem sich radial erstreckenden umlaufenden Flansch (114) abgekantet wird und anschließend zu einem offenen, vorgespannten Ring mit einem Ringstoß (111) geformt wird, der anschließend in die Zylinderlaufbuchse (220) oder in den Zylinder eingebracht wird, wobei der sich radial erstreckende umlaufende Flansch (114) in einen umlaufenden Falz (223) aufgenommen wird, der in der oberen Stirnfläche der Zylinderlaufbuchse (220) oder des Zylinders vorgesehen ist.

14. Verfahren nach Anspruch 13, **dadurch gekennzeichnet, dass** vor dem Formen des Streifens zu einem offenen vorgespannten Ring ein definiertes Maulspiel (M) eingestellt wird.

## Claims

1. A cylinder liner (220) or a cylinder of an internal combustion engine (230, 330), comprising an insert (110) that narrows the inside diameter (D) of the cylinder liner (220) or of the cylinder, the insert (110) being designed as an open, biased ring (110) that has a ring joint (111) and is held such that the radial surface pressure is approximately equal around a circumference, **characterized in that** the cylinder liner (220) or the cylinder comprises a circumferential fold (223), which is provided in the upper end face of the cylinder liner (220) or of the cylinder, the insert (110) has a radially extending circumferential flange (114) accommodated in the circumferential fold (223), and the ratio of the thickness (d) of the ring wall to the inside diameter (D) of the cylinder liner (220) or the cylinder is between 0.001 and 0.02.

2. The cylinder liner or cylinder according to claim 1, characterized the ratio of the thickness (d) of the ring wall to the inside diameter (D) of the cylinder liner (220) or of the cylinder is between 0.003 and 0.01.

3. The cylinder liner or cylinder according to any one of the preceding claims, **characterized in that** the ring joint (111) has a defined joint play (S).

4. The cylinder liner or cylinder according to any one of the preceding claims, **characterized in that** the mutually facing joint ends (112, 113) of the ring joint (111) run at a defined angle (W) parallel to one another.

5. The cylinder liner or cylinder according to any one of the preceding claims, **characterized in that** the thickness (d) of the ring wall is 0.5 mm to 0.8 mm.

6. The cylinder liner or cylinder according to any one of the preceding claims, **characterized in that** the insert (110) is made from sheet metal.

7. A cylinder crankcase (131, 331) for an internal combustion engine (230, 330), comprising at least one cylinder liner (220) or at least one cylinder according to any one of claims 1 to 6.

8. An internal combustion engine (230, 330), comprising a cylinder crankcase (131, 331) including at least one cylinder or at least one cylinder liner (220) according to any one of claims 1 to 6.

9. The internal combustion engine (230, 330) according to claim 8, **characterized in that** the pistons (233) disposed in the cylinder liners (220) or in the cylinders have a cut-out along the top lands (236) thereof, into which the insert (110) projects.

10. The internal combustion engine according to either claim 8 or 9, the engine specifically being a diesel engine for a commercial vehicle.

11. The internal combustion engine according to either claim 8 or 9, the engine specifically being a passenger car engine.

12. The internal combustion engine according to either claim 8 or 9, the engine specifically being a small-power engine, and in particular a two-stroke engine.

13. A method for producing a cylinder liner (220) or a cylinder of an internal combustion engine (230), for narrowing the diameter of the cylinder liner (220) or of the cylinder, **characterized in that** a strip having a defined width is punched from a sheet metal part, the one longitudinal edge of which is bent to form a radially extending circumferential flange (114) and subsequently formed into an open, biased ring having a ring joint (111), which is subsequently introduced into the cylinder liner (220) or into the cylinder, the radially extending circumferential flange (114) being accommodated in a circumferential fold (223), which is provided in the upper end face of the cylinder liner (220) or the cylinder.

14. The method according to claim 13, **characterized in that** a defined gap play (M) is set before the strip is formed into an open biased ring.

## Revendications

1. Chemise de cylindre (220) ou cylindre de moteur à combustion (230, 330), avec un insert (110) qui rétrécit le diamètre intérieur (D) de la chemise de cylindre (220) ou du cylindre, où l'insert (110) est conçu sous la forme d'un anneau (110) ouvert précontraint avec un joint annulaire (111), qui est maintenu de telle manière que la pression surfacique radiale est presque égale du côté circonférentiel, **caractérisé en ce que** la chemise de cylindre (220), ou le cylindre, présente une rainure circonférentielle (223) qui est prévue dans la surface frontale supérieure de la chemise de cylindre (220) ou du cylindre, que l'insert (110) présente une bride (114) circonférentielle s'étendant radialement qui repose dans la rainure circonférentielle (223) et que le rapport de l'épaisseur (d) de la paroi circulaire sur le diamètre intérieur (d) de la chemise de cylindre (220) ou du cylindre se situe entre 0,001 et 0,02.

2. Chemise de cylindre ou cylindre selon la revendication 1, caractérisé(e) en ce que le rapport de l'épaisseur (d) de la paroi circulaire sur le diamètre intérieur (D) de la chemise de cylindre (220) ou du cylindre se situe entre 0,003 et 0,01.

3. Chemise de cylindre ou cylindre selon l'une des revendications précédentes, caractérisé(e) en ce que le joint annulaire (111) présente un jeu de joint (S) défini.

4. Chemise de cylindre ou cylindre selon l'une des revendications précédentes, caractérisé(e) en ce que les extrémités de joint (112, 113) se faisant face l'une à l'autre du joint annulaire (111) de l'insert s'étendent parallèlement l'une par rapport à l'autre sous un angle (W) défini.

5. Chemise de cylindre ou cylindre selon l'une des revendications précédentes, caractérisé(e) en ce que l'épaisseur (d) de la paroi circulaire s'élève de 0,5 mm à 0,8 mm.

6. Chemise de cylindre ou cylindre selon l'une des revendications précédentes, caractérisé(e) en ce que l'insert (110) est fabriqué en tôle.

7. Carter-cylindres (131, 331) pour un moteur à combustion (230, 330) avec au moins une chemise de cylindre (220) ou au moins un cylindre selon l'une des revendications 1 à 6.

8. Moteur à combustion (230, 330) avec un carter-cylindres (131, 331) qui présente au moins un cylindre ou au moins une chemise de cylindre (220) selon l'une des revendications 1 à 6.

9. Moteur à combustion (230, 330) selon la revendication 8, **caractérisé en ce que** les pistons (233) disposés dans les chemises de cylindre (220) ou dans les cylindres présentent un évidement (237) le long de leur cordon de feu (236) dans lequel pénètre l'insert (110).

10. Moteur à combustion selon l'une des revendications 8 ou 9, notamment moteur diesel pour un véhicule utilitaire.

11. Moteur à combustion selon l'une des revendications 8 ou 9, notamment moteur de voiture particulière.

12. Moteur à combustion selon l'une des revendications 8 ou 9, notamment un petit moteur, notamment un moteur à deux temps.

13. Procédé de fabrication d'une chemise de cylindre (220) ou d'un cylindre d'un moteur à combustion (230), pour le rétrécissement du diamètre de la chemise de cylindre (220) ou du cylindre, **caractérisé en ce qu'**une bande avec une largeur définie est estampée à partir d'une pièce en tôle, dont une arête longitudinale est chanfreinée sous la forme d'une bride (114) circonférentielle s'étendant radialement et est ensuite formée en un anneau ouvert précontraint avec un joint annulaire (111) qui est ensuite rapporté dans la chemise de cylindre (220) ou dans le cylindre, où la bride circonférentielle (114) s'étendant radialement est admise dans une rainure circonférentielle (223), qui est prévue sur la surface frontale de la chemise de cylindre (220) ou du cylindre.

14. Procédé selon la revendication 13, **caractérisé en ce qu'**avant le moulage de la bande pour former un anneau ouvert précontraint, un jeu d'ouverture défini (M) est réglé.
